# EUROPEAN PATENT APPLICATION

(11) **EP 2 522 922 A1**
(43) Date of publication of application: **14.11.2012**
(21) Application number: 11166042.9
(22) Date of filing: 13.05.2011
(51) Int. Cl.: F24F 11/00, F24F 12/00, G01N 9/26

(54) **A method of ventilating a space of a building**

(71) Applicant: Arcovent International AB, 831 30 Östersund (SE)
(72) Inventor: Nilsson, Nils-Johan, 832 46, Frösön (SE)
(74) Representative: Nilsson, Lars

(57) **Abstract**

This invention relates to a method of ventilating a space (130) of a building (132), by means of a ventilation system (100) comprising a first air fan (108, 112), an air density comparator (114), and a control device (116) connected with the density comparator and with the air fan, which method comprises:
comparing the outside air density with the inside air density by means of the air density comparator and generating a difference signal representing the difference of density;
detecting the difference signal by means of the control device; and
controlling, by means of the control device, the speed of the first air fan on basis of the difference signal such that the difference is kept at a desired level.

## Description

### FIELD OF THE INVENTION

The present invention relates to a method of ventilating a space of a building.

### BACKGROUND OF THE INVENTION

A conventional ventilation installation comprises an intake air terminal device, an exhaust air terminal device, and a heat exchanger, which uses energy of the exhaust air to heat the intake air when the outside air is colder than the desired temperature of inside air. The method of ventilation is based on creating an amount of under pressure inside the building in order to prevent moisture of the inside air from penetrating the walls and causing condense therein which renders damages. In order to secure the under pressure the conventional methods of controlling the ventilation are based on ascertaining that there is a higher exhaust flow than intake flow.

However, the under pressure often causes discomfort, in particular in larger buildings having a large opening, such as a gate or an entrance, to the outside environment. At low outside temperatures large amounts of cold air are sucked into the building causing discomfort for those being close to the opening as well as low floor temperatures throughout the floor area at the same level as the floor of the opening.

Many attempts have been made to balance the ventilation in order to eliminate the discomfort, however this far the attempts have been more or less unsuccessful.

### SUMMARY OF THE INVENTION

It is an object of the present invention to provide a solution to the problem of discomfort addressed above.

The object is achieved by the method of ventilating a space of a building as defined in claim 1.

The invention is based on the insight that a there is a problem of a difference of weight per volume unit, i.e. density, between the air outside of the building and inside of the building which is either caused by or increased by the conventional way of controlling the ventilation.

The problem becomes particularly evident when the outside air is colder than the inside air. Since the ventilation is controlled on basis of air flow through the intake and exhaust air terminal devices, conventional methods do not consider the difference of density between warm air and cold air. Thus, in order to secure the under pressure as explained above, conventional ventilation methods see to it that the exhaust air fan, comprised in the exhaust air terminal device, always rotates a bit faster than the intake air fan, comprised in the intake air terminal device, i.e. during a time period a larger volume of air is ventilated out of the building than the volume of air ventilated into the building. If, at the same air temperature outside as inside of the building, the exhaust air flow is for instance 10% higher than the intake air flow, then the difference of inlet and output air volume is about 10% as well. This generates a discomfort problem. However, if the outside air is, for instance, 20 °C below the inside air, then the density of the outside air at the same fan setting renders a difference of volume of about 7%, since the density of the outside air is substantially higher than the density of the inside air, which considerably increases the discomfort problem.

In accordance with an aspect of the present invention, there is provided a method of ventilating a space of a building, by means of a ventilation system comprising a first air fan, an air density comparator, and a control device connected with the density comparator and with the air fan. The method comprises:
comparing the outside air density with the inside air density by means of the air density comparator and generating a difference signal representing the difference of density;
detecting the difference signal by means of the control device; and
controlling, by means of the control device, the speed of the first air fan on basis of the difference signal such that the difference is kept at a desired level.

In accordance with another aspect of the present invention, there is provided a ventilation system a first air fan, an air density comparator, and a control device connected with the density comparator and with the air fan. The air density comparator is connected to outside air and to inside air and is arranged to detect a density difference between the outside air density and the inside air density. The control device is arranged to detect a density difference signal from the air density comparator, and to control the speed of the first air fan on basis of the density difference signal such that the density difference is kept at a desired level.

Thus, according to this invention, the control of ventilation is based on a comparison of densities of inside and outside air, and the control keeps the difference at a desired level. Mostly, the desired level is zero or as close to zero as possible. The present control of ventilation is capable of eliminating any difference, or at least decreasing it to a minimum where the level of difference becomes low enough to prevent the discomfort problem. However, in some cases it can be desired to keep the difference at a higher level, as will be exemplified below. By means of the present method it is possible to ensure a high accuracy of the setting, i.e. to obtain a small variation in the set level of difference. This is in significant contrast to the prior art.

In accordance with an embodiment of the method, the speed control comprises setting a constant speed of the intake air fan and controlling the speed of the exhaust air fan in dependence of the difference signal. This is based on that the ventilation system further comprises a second fan, which is an intake air fan, and the first fan is an exhaust air fan. This is an advantageous way of arranging the control in a mechanical ventilation system having intake and exhaust fans.

In accordance with an embodiment of the method, the speed control comprises decreasing the speed of the exhaust air fan when the inside air density is lower than the outside air density and increasing the speed of the exhaust air fan when the inside air density is higher than the outside air density. By controlling the speed of the exhaust air fan an accurate control is obtained and a basic amount of fresh air introduced into the building per time unit is secured.

The method is advantageously used for preventing undesired emissions of material from entering the inside air of a building. Thereby, as will be further described below, for example unhealthy emissions from wall materials and ground ozone is kept out of the inside atmosphere.

These and other aspects, features, and advantages of the invention will be apparent from and elucidated with reference to the embodiments described hereinafter.

### BRIEF DESCRIPTION OF THE DRAWINGS

The invention will now be described in more detail and with reference to the appended drawings in which:
Fig. 1 is a schematic cross-sectional view of a density comparator used in the ventilation system of Fig. 2; and
Fig. 2 is a schematic cross-sectional view of a building having an embodiment of a ventilation system according the present invention installed.

### DESCRIPTION OF PREFERRED EMBODIMENTS

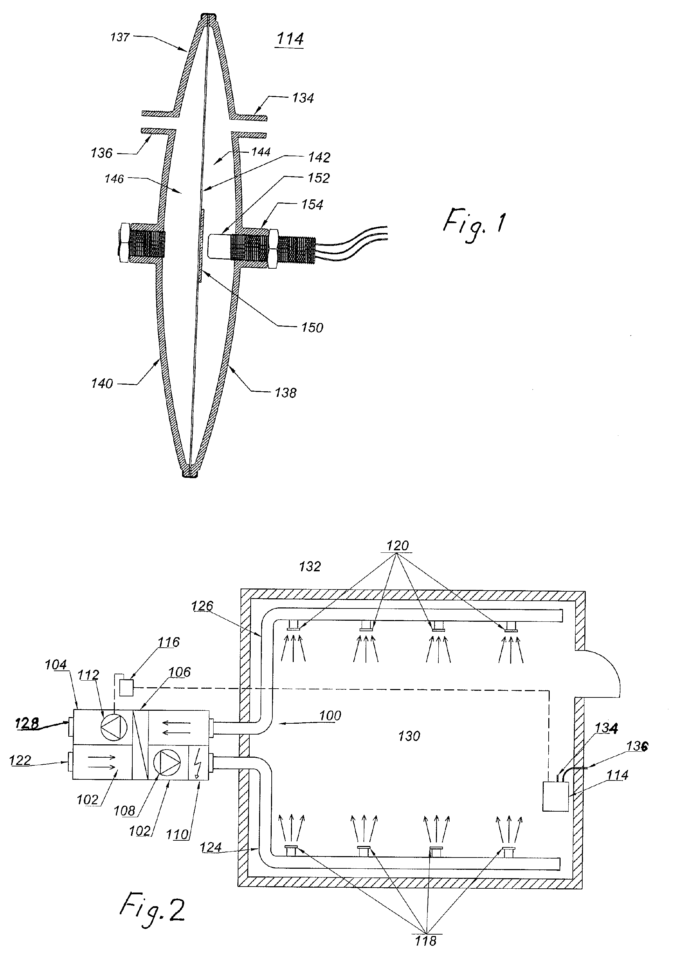

Referring to Figs. 1 and 2 a typical mechanical ventilation system 100 comprises an intake air terminal device 102, an exhaust air terminal device 104, and a heat exchanger 106. The intake air terminal device 102 comprises an intake air fan 108, and a postheating device 110, and the exhaust air terminal device 104 comprises an exhaust air fan 112. Further, the ventilation system comprises an air density comparator 114, and a control device 116, which is connected with the air density comparator and with at the exhaust air terminal device 104 for controlling the speed of the exhaust air fan 112. Additionally, the ventilation system 100 comprises intake air nozzles 118 and exhaust air nozzles 120 arranged in the space 130, such as one or more rooms, of the building 132, intake air ducts 122, 124 for conducting intake air from the outside of the building 132 past the heat exchanger 106 and the intake air terminal device 102 to the intake air nozzles 118, and exhaust air ducts 126, 128 for conducting air from the exhaust air nozzles 120 past the heat exchanger 106 and the exhaust air terminal device 104 to the outside of the building.

The ventilation system operates as follows. Intake air is sucked by the intake air terminal device102, and more particularly by its intake air fan 108, from the outside of the building 132 through a first intake air duct 122, through the heat exchanger 106, and through the intake air fan 108. Then the intake air is blown by the intake air fan 108 through the postheater 110, through a second intake air duct 124, and through the intake air nozzles 118 into the space 130 of the building 132. Exhaust air is sucked by the exhaust air terminal device 104, and more particularly the exhaust air fan 112, from the space 130 of the building 132 through the exhaust air nozzles 120, a first exhaust air duct 126, and the heat exchanger 106 to the exhaust air fan 112, and is then blown through a second exhaust air duct 128 to the outside of the building 132. The heat exchanger 106 is primarily used as an energy saver to preheat cold intake air from the outside by means of the energy that resides in the exhaust air which is ventilated out. The temperature of the intake air is fine tuned by means of the postheater 110 before introduced into the space 130.

The density comparator 114 is mounted inside the space 130 and is connected with the inside air by means of a first pipe 134, and with the outside air by means of a second pipe 136 extending through a wall of the building 132. The density comparator 114 compares the density of the outside air with the density of the inside air and generates a difference signal representing the difference of density. The control device 116 detects the difference signal and controls the exhaust air fan 112 on basis of the difference signal such that the difference is minimized. This means that if the density of the inside air is less than the density of the outside air, then the control device 116 decreases the speed of the exhaust air fan 112. Since the amount of air introduced into the space 130 compared to the amount of air removed from the space 130 is then increased the density of the inside air increases as well. If the density of the inside air is higher than the density of the outside air, then the speed of the exhaust air fan 112 is decreased. The control device 116 is arranged to control the speed such that the difference is as small as possible both as regards a mean value and as regards an absolute maximum difference value, i.e. the variation is kept small as well.

In order to obtain an accurate comparison of the inside and outside densities, according to an embodiment of the ventilation system the density comparator 114 is designed as follows. The density comparator 114 comprises a rigid housing 137, which consists of circular first and second halves 138, 140, a flexible membrane 142, which divides the hollow interior of the housing 137 in two chambers 144, 146. A first chamber 144 thereof is in contact with the inside air via the first pipe 134, and a second chamber 146 thereof is in contact with the outside air via the second pipe 136. At the centre of the membrane 142, at the side thereof facing the first chamber 144, there is provided a sensor plate 150 made from an electrically conductive material. A sensor 152 is arranged in a seat 154 of the first half 138 of the housing 137. The sensor 152 extends into the first chamber 144 towards the centre of the sensor plate 150, and it is arranged to inductively sense the distance to the sensor plate 150. The sensor 152 is in threaded engagement with the seat 154 in order to provide for a calibration of the sensor 152. The control device 116 is connected with the sensor 152, and receives a sensor signal representing the distance, which in turn is related to the density difference between inside and outside air. This density comparator 114 can be made extremely accurate. The density difference causes a difference of pressure, which is detected by means of the density comparator 114. A difference as small as about 1 Pascal is detectable.

The invention is advantageous, not only for eliminating experienced discomfort due to draught and the like, but also for minimizing the contents of hazardous gaseous compositions being emitted from the materials of the building, such as wall materials, floor materials, adhesives, and the like, or being emitted from the ground, such as ozone or radon. When the under pressure of the inside air is removed due to the equalisation of the inside and outside air densities, the suction of air through the walls and floor of the building 132, which suction brings along the hazardous emissions, is stopped, and only clean air from the outside is entered into the space 130. Therefore, the method and system of the present invention is useful for decontaminating houses affected by radon radiation, houses affected by ozone, houses affected by hazardous emissions from building materials, etc.

The present method of ventilating a space of a building is applicable to virtually any kind of building. For example, in a building having no mechanical ventilation at all, but relying on the principle of natural draught, an embodiment of the present ventilation system comprising the intake air fan 108, the air density comparator 114, and the control device 116, connected with the air density comparator 114 and the intake air fan 108, is installed. The method of ventilation is then executed in a similar way as described above. That is, the speed of the intake air fan 108 is varied in dependence on the output signal of the air density comparator 114. This works well since the ventilation idea of a natural draught building is that, when heated, inside air raises and is ventilated out at ceiling level, while replacement air is entered through intake openings at a lower level. This process rarefies the inside air compared to the outside air, which causes the same undesired effects as explained above for a building having a mechanical ventilation system.

As mentioned in the summary above, in some cases it is desired not to minimize the under pressure but to keep it at an accurately controlled level. One example is a hospital where it is desired from health reasons to keep a minor under pressure within a part of the building where the isolation ward is housed. By means of the present ventilation system and method a highly accurate control is obtained.

Above, embodiments of the ventilation system and method of ventilating a space of a building according to the present invention as defined in the appended claims have been described. These should be seen as merely non-limiting examples. As understood by a skilled person, many modifications and alternative embodiments are possible within the scope of the invention.

For instance, according to an alternative embodiment the intake air fan is controlled by means of the control device instead of the exhaust air fan, and it is also possible to control both fans.

It is to be noted, that for the purposes of this application, and in particular with regard to the appended claims, the word "comprising" does not exclude other elements or steps, that the word "a" or "an", does not exclude a plurality, which per se will be apparent to a person skilled in the art.

## Claims

1. A method of ventilating a space (130) of a building (132), by means of a ventilation system (100) comprising a first air fan (108, 112), an air density comparator (114), and a control device (116) connected with the density comparator and with the air fan, which method comprises:
comparing the outside air density with the inside air density by means of the air density comparator and generating a difference signal representing the difference of density;
detecting the difference signal by means of the control device; and
controlling, by means of the control device, the speed of the first air fan on basis of the difference signal such that the difference is kept at a desired level.

2. A method of ventilating a space of a building according to claim 1, wherein the ventilation system further comprises a second fan, said first fan being an exhaust air fan (112), and said second fan being an intake air fan (108), and said controlling the speed comprising setting a constant speed of the intake air fan and controlling the speed of the exhaust air fan in dependence of the difference signal.

3. A method of ventilating a space of a building according to claim 2, said controlling the speed comprises decreasing the speed of the exhaust air fan (112) when the inside air density is lower than the outside air density and increasing the speed of the exhaust air fan when the inside air density is higher than the outside air density.

4. A method of ventilating a space of a building according to claim 1, wherein the first fan is an intake air fan.

5. A method of preventing undesired emissions of material from entering the inside air of a building, comprising performing the method of ventilating a space of a building according to any one of the preceding claims.

6. A ventilation system comprising a first air fan (108, 112), an air density comparator (114), and a control device (116) connected with the density comparator and with the air fan, wherein the air density comparator is connected to outside air and to inside air and is arranged to detect a density difference between the outside air density and the inside air density, and wherein the control device is arranged to detect a density difference signal from the air density comparator, and to control the speed of the first air fan on basis of the density difference signal such that the density difference s kept at a desired level.

7. A ventilation system according to claim 6, further comprising a second air fan (108, 112), wherein one of the first and second air fans is an intake air fan (108) and the other one is an exhaust air fan (112).

8. A ventilation system according to claim 7, wherein the control device (116) is arranged to set a constant speed of the intake air fan (108), and to control the speed of the exhaust air fan (112) in dependence of the difference signal.

9. A ventilation system according to claim 7 or 8, wherein the control device (116) is arranged to decrease the speed of the exhaust air fan (112) when the inside air density is lower than the outside air density and to increase the speed of the exhaust air fan when the inside air density is higher than the outside air density.

10. A ventilation system according to claim 6, wherein the first fan is an intake air fan (108).
